# EUROPEAN PATENT SPECIFICATION

(11) **EP 2 596 576 B1**
(45) Date of publication and mention of the grant of the patent: **29.10.2014**
(21) Application number: 10734122.4
(22) Date of filing: 19.07.2010
(51) Int. Cl.: H02P 23/00, H02P 1/02, A01G 3/053

(54) **ELECTRIC POWER TOOL WITH ALTERNATING STARTING DIRECTION**
ELECTRIC POWER TOOL WITH ALTERNATING STARTING DIRECTION
OUTIL ALIMENTÉ ÉLECTRIQUEMENT AVEC SENS DE DÉMARRAGE ALTERNÉ

(43) Date of publication of application: 29.05.2013
(73) Proprietor: HUSQVARNA AB, 561 82 Huskvarna (SE)
(72) Inventor: KOHL, Peter, 89257 Illertissen (DE); WAIGEL, Hans, 89194 Schnürpflingen (DE); MOCK, Axel, 89134 Blaustein (DE)
(74) Representative: Finkele, Rolf
(86) International application number: PCT/EP2010/060396
(87) International publication number: WO 2012/010190

(56) References cited:
- EP-A1- 1 969 919
- EP-A1- 2 027 768

## Description

The present invention relates to an electric power tool including at least one working implement driven by a motor. More particularly, it relates to a system for varying a starting direction of the working element of the electric power tool.

### BACKGROUND

Typically, electric power tools such as, but not limited to, hedge trimmer, grass shears, shrub shears, grinder, sander, shredder or line trimmer, may include a motor, one or more working implements driven by the motor, and a gearbox assembly. In particular with hedge trimmers or shrub shears the working implements are placed adjacent to each other in a superimposed relationship, such that the working implements are configured to perform a reciprocal operational movement. Such power tools are known from documents EP 2 027 768 and EP 1 969 919. With other electric power tools the working implements might exhibit oscillatory or rotational relative movements along a specified direction. Further, the motor of the electric power tool is connected to a battery or another power supplying means to operate the one or more working implements.

Electric power tools described above are configured to start in a single direction i.e. starting direction of the working implement of known electric power tools under normal working condition is fixed. Such a unidirectional start of the working implement results in frequent wear and tear of the mechanical components of the power transmission between the motor and the at least one working implement of the electric power tool. Consequently the longevity of the electric power tool may be adversely affected.

The power tools known in the art may be provided with monitoring systems to periodically monitor the wear and tear. Such monitoring systems may include a sensing means for sensing the condition of the components of the power tool. The monitoring systems are complex and require additional hardware. Complex monitoring systems not only add bulk but also increase the cost of manufacturing the power tool. Also, incorporation of monitoring system may not reduce the rate of wear. In other words, the monitoring system known in the art are not helpful in increasing the expected life of the power tool.

Therefore there is a need for a system that overcomes the aforementioned problems. An inexpensive and simplified system that reduces the rate of wear and tear of the components of a power tool is desired.

### SUMMARY

In view of the above, it is an objective to solve or at least reduce the problems discussed above. In particular, an objective is to provide an inexpensive and simplified system for frequently reversing the starting a direction of the operational movement of at least one working implement of an electric power tool.

The objective is achieved with a novel electric power tool according to claim 1. The electric power tool includes at least one working implement adapted to perform an operational movement, a motor to drive the at least one working implement and a control unit. The control unit is adapted to control a start and stop of the motor. The control unit is further adapted to vary a starting direction of the operational movement of the at least one working implement. The control unit also ensures that, over a multitude of starting cycles, the ratio of the number of starts in one direction to the number of starts in the opposite direction should not exceed 10 and should preferably be less than 2 and most preferably be uniformly distributed. The varying of starting direction of the motor may reduce the wear of coupling system, between motor and electric power tool, in particular with eccentric gear system. Further, for electric power tool such as, hedge trimmer, varying the starting direction may also ensure that any branch stuck between a pair of cutting teeth in the working implement (cutting blades of hedge trimmer) may be easily removed.

According to claim 2, the control unit is adapted to keep a uniform distribution of both starting directions, with respect to the operational movement, over a multitude of starting cycles. The uniform distribution ensures that both the starting directions with respect to the operational movement of the at least one working implement are equally preferred.

According to claim 3, the operational movement is at least one of rotary, oscillating, eccentric rotary movement.

According to claim 4, the control unit may use any at least one of an electric device, an electronic device or a mechanical device to affect the change of the starting direction of the electric power tool. Further, according to claim 5, the electric device or the electronic device includes a storing device. The storing device may store one or more parameters to define the starting direction of the electric power tool. The storing device, for example, may store a bit, and the value assigned to the bit may decide the starting direction of the electric power tool. Moreover, according to claim 6, the storing device disclosed may either be a memory or a flip-flop.

According to claim 7, the electronic device or the electric device disclosed in claim 3 may include a circuit for generating one or more parameters helpful in deciding the starting direction of the electric power tool. Further, according to claim 8, the one or more parameters disclosed in claim 7 may be randomly generated.

According to claim 9, the decision in respect to the starting direction of the electric power tool may be taken during a start-up of the motor. The control unit during the start-up may take a decision pertaining to the starting direction of the electric power tool.

According to claim 10, the decision in respect to the starting direction of the electric power tool may be generated after the motor is stopped. The decision taken is applied to the start that follows the stop. The control unit may have a storing device which store one or more parameters when the working implement is stopped. When the electric power tool is restarted, the value of parameters stored in the storing device may decide the starting direction.

According to claim 11, the control unit is provided with a double pole double throw switch for varying the staring direction of the electric power tool. A double pole double throw switch provides an inexpensive and simple solution for varying the starting direction of the electric power tool. Alternatively, according to claim 12, a two coil relay may also be used for varying the starting direction of the electric power tool.

According to claim 13, mechanical device may include a mechanical memory or flag for deciding the starting direction of the electric power tool. The mechanical device may have two stable equilibrium states, each state corresponding to one starting direction. Further, according to claim 14, the said mechanical device may be a gearing device. The gearing device is adapted to switch its directional transmission behavior in each starting attempt.

According to claim 15, the electric power tool may be a hedge trimmer, grass shears, shrub shears, grinder, sander, shredder, line trimmer or the like.

### BRIEF DESCRIPTION OF THE DRAWINGS

The invention will in the following be described in more detail with reference to the enclosed drawings, wherein:
FIG. **1** illustrates an exemplary electric power tool in which an embodiment of the present invention may be applied;
FIG. **2** illustrates a system for varying the starting direction of at least one working implement of the electric power tool, according to an embodiment of the present invention;
FIG. **3** illustrates a system for varying the starting direction of at least one working implement of the electric power tool, according to an alternate embodiment of the present invention; and
FIG. **4** illustrates a system for varying the starting direction of at least one working implement of the electric power tool, according to yet another embodiment of the present invention.

### DESCRIPTION OF EMBODIMENTS

The present invention will be described more fully hereinafter with reference to the accompanying drawings, in which preferred embodiments of the invention are shown. This invention may, however, be embodied in many different forms herein; rather, these embodiments are provided so that this disclosure will be thorough and complete, and will fully convey the scope of the invention to those skilled in the art. In the drawings, like numbers refer to like references.

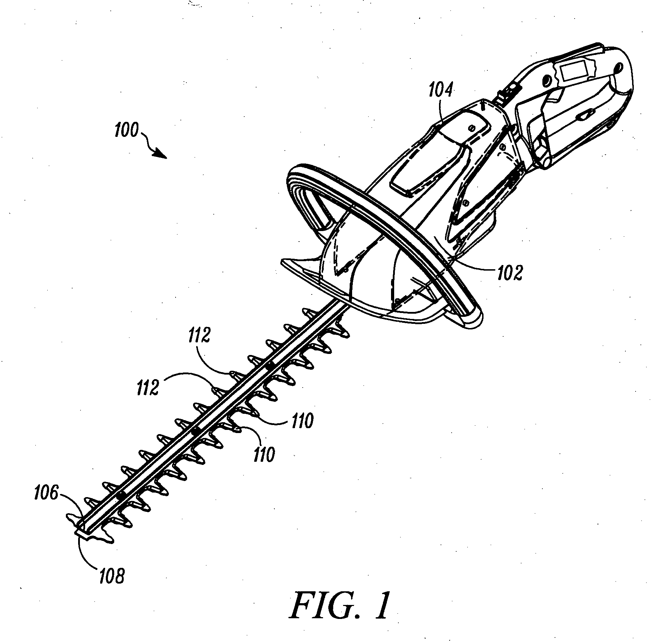

FIG. **1** shows a perspective view of a hedge trimmer **100,** as an exemplary electric power tool **100,** according to an embodiment of the present invention. Although the described example is a hedge trimmer, it should be understood that the present invention could be incorporated into any suitable type of electric power tool such as, but not limited to, line trimmer, sander, grinder, shrub shears and shredder and is not limited to use merely in a hedge trimmer, and may be incorporated in different types of embodiments. The hedge trimmer **100** is referred hereinafter as an electric power tool **100.**

The electric power tool **100** generally includes a frame **102,** a drive unit **104** connected to the frame **102,** and at least one working implement. In an embodiment of the present invention, the working implement is adapted to perform an operational movement. In various embodiments of the present invention, the operational movement may include, but not limited to, oscillating movement, rotary movement, eccentric rotary movement and the like. In the exemplary embodiment of FIG. 1, the working implement may include a pair of alternating, reciprocating cutting blades **106** and **108,** though various other blade configurations including various numbers of cutting blades **106** and **108** (herein after referred to as working implements **106,** and **108**) may also be used. In one alternative embodiment one of the blades **106** could exhibit reciprocal movement while the other blade **108** stays in a fixed position.

The working implements **106** and **108** each have a plurality of cutting teeth **110** and 112 respectively. The drive unit **104,** in the electric power tool **100** may include an electric motor (not shown) whose output shaft is connected to a drive shaft (not shown). The drive unit **104** is fixedly connected to the frame **102.** Further, a gearbox (not shown) may be operatively connected to the drive unit **104,** and is configured to transfer motor power to drive the working implements **106** and **108.** In various embodiments of the present invention, the gearbox may be an eccentric gearbox.

Various embodiments of the present invention may be applied in the exemplary electric power tool **100** for improving operational convenience. In an embodiment of the present invention the electric power tool **100** is provided with a control unit for controlling the starting direction of the electric power tool **100.**

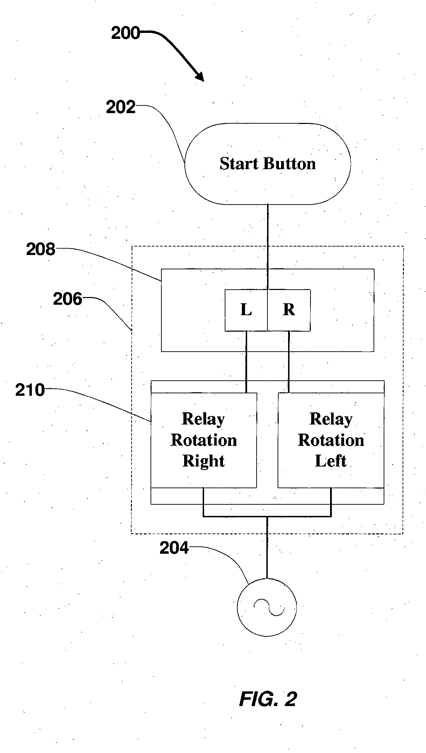

FIG. **2** shows a system **200** for varying the starting direction of the electric power tool **100** according to an embodiment of the present invention. The system **200** may be incorporated in the exemplary electric power tool **100.** The system **200** may include a button **202** for turning the electric power tool **100** on and off. In an embodiment of the present invention, the button **202** may be provided on the body of the electric power tool **100.** As shown, the system **200** may also consist of a motor **204.** In an embodiment of the present invention, the motor **204** may be included in the drive unit **104** of the electric power tool **100.** In an embodiment of the present invention, the motor **204** is adapted to drive the plurality of working implements **106** and **108** to perform an operational movement. In various embodiments of the present invention, a shaft of the motor **204** may be connected to the gear box for transmission of power form the motor **204** to drive the working implements **106** and **108.**

The system **200** may further include a control unit **206** for controlling a start and stop of the motor **204.** Further, since the motor **204** is controlled by the control unit **206,** the control unit **206** is adapted to vary the starting direction of the operational movement of the at least one of the working implements **106** and **108.** In an embodiment of the present invention, the control unit **206** is configured in a manner such that over a multitude of the starting cycles none of the two starting directions in respect to the operational movement exceed the opposite starting direction by a pre-determined factor. In an embodiment of the present invention, the pre-determined factor may be 10 (ten) such that the ratio of number of starts in one direction to the number of starts in the other direction may not exceed 10. In another embodiment the pre-determined factor may be less than 2 (two). Further, in another embodiment of the present invention, the control unit **206** may maintain a uniform distribution of both starting directions over a multitude of starting cycles. In other words, the control unit ensures that, over a multitude of starting cycles, the ratio of the number of starts in one direction to the number of starts in the opposite direction should not exceed 10 and should preferably be less than 2 and most preferably be uniformly distributed.

In an embodiment of the present invention, varying the starting direction of the operational movement of the working implements **106** and **108** and thus the electric power tool **100,** may reduce the wear of coupling systems (not shown in FIGS), between the motor **204** and the electric power tool **100**. Further, the varying starting direction may have other advantages based on the nature of operational movement of the electric power tool **100.** For example, in case of the hedge trimmer **100,** any branch that may stuck between a pair of cutting teeth in the working implement **106** and **108** (cutting blades of hedge trimmer) may be easily removed.

Those of ordinarily skilled in the art will appreciate that the present invention can be applied to any electric power tools that have at least one working implement, which is adapted to perform an operational movement in either direction. For example, a grinder wheel of a grinder can rotate in either direction. Similarly, the cutting blades **106** and **108** of the hedge trimmer **100** can reciprocate in either direction.

In various embodiments of the present invention, the control unit **206** may utilize at least one of electrical, electronic or mechanical device to vary the starting direction of the electric power tool **100.**

As shown in FIG. **2****,** the control unit **206** utilizes an electronic device, which is logic circuit **208** in this case for varying the starting direction of the electric power tool **100.** The logic circuit **208** may include one or more flip-flops. In an embodiment of the present invention, the logic circuit **208** may generate one or more parameters for deciding the starting direction of the electric power tool **100.** Further, a dedicated circuit that includes one or more flip-flops may be provided for generating the one or more parameters. In an exemplary embodiment, the logic circuit 208 may generate an n bit binary number for deciding the starting direction of the cutting apparatus 100. In an embodiment of the present invention, the logic circuit 208 may be programmed to generate a definite sequence of parameters. In another embodiment of the present invention, the logic circuit 208 may generate the parameters randomly. In various embodiments of the present invention, the logic circuit 208 may generate parameters such that none of the starting directions is preferred over the other starting direction by more than a factor of 10. In another embodiment of the present invention, the factor may be less than 2. Further, in an embodiment of the present invention, both starting directions may be uniformly distributed over a multitude of starting cycle. In other words, the logic circuit **208** may generate parameters such that, over a multitude of starting cycles, the ratio of the number of starts in one direction to the number of starts in the opposite direction should not exceed 10 and should preferably be less than 2 and most preferably be uniformly distributed.

Further, the logic circuit **208** may also include a storing device for storing the parameters generated. The storing device may be a flip-flop device. The logic circuit **208** may include other storing devices such as, but not limited to a Random Access Memory (RAM), Read Only Memory (ROM), Programmable Read Only Memory (PROM), Erasable Programmable Read Only Memory (EPROM) and the like.

In an embodiment of the present invention, a decision in respect to the starting direction of the electric power tool **100** is generated during a start-up of the motor **204.** For example, when the motor **204** is energized for start-up, the logic circuit **208** may generate parameters for instantly deciding the starting direction of the electric power tool **100.** The logic circuit **208** may also employ other methods, without generating parameters for deciding the starting direction of the electric power tool **100.** In another embodiment of the present invention, the decision in respect to the starting direction may be generated with the stop of the motor **204,** where the stop of the motor **204** precedes a following start. For example, the logic circuit **208** may store values of parameters on a storing device while the motor **204** of the electric power tool **100** is running. The control unit **206** may energize any one coil of a two coil relay **210** based on the stored parameters for starting the electric power tool **100** in a specified direction.

The two coil relay **210** is an electrical device for affecting the change in the rotational direction of the motor **204.** Relay **210** is a switching device which connects the circuit when the coil associated with it is energized. In the two coil relay **210,** energizing each coil completes the circuit with a different polarity. Energizing one coil may make the motor **204** to rotate in one direction while energizing the other coil may rotate the motor **204** in the opposite direction. The control unit **206** may vary the staring direction by suitably energizing any one coil of the relay **210.**

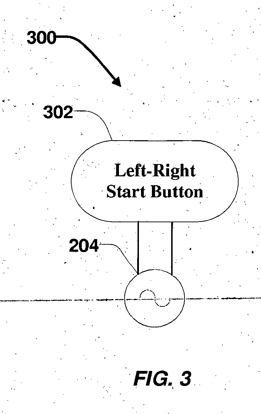

FIG. 3 shows a system **300** for varying the starting direction of the electric power tool **100** according to an alternate embodiment of the present invention. The system **300** may include the motor **204** and a button **302.** In an embodiment of the present invention, the button **302** may be provided on the frame **102** and may be used for starting and stopping the electric power tool **100.**

In an embodiment of the present invention, the button **302** may incorporate a Double Pole Double Throw (DPDT) switch. DPDT is an electric device which has the capability of completing the circuit with two different polarities. Typically a DPDT consists of a hanging switch with two different connection points. Further, connecting the switch to one connection generates a polarity across the terminals of the motor **204** and connecting the switch to the other connection point generates a reverse polarity across the motor **204.** By controlling the DPDT, the motor **204** may be rotated in both forward and reverse direction, thereby varying the starting direction of the working implements **106** and **108** and thus the electric power tool **100.** In an embodiment, the DPDT may be manually controlled. Alternatively, an automatic control system may control the switching of the DPDT. The functionality of the automatic control system may be similar to those of the control unit **206** of system **200.**

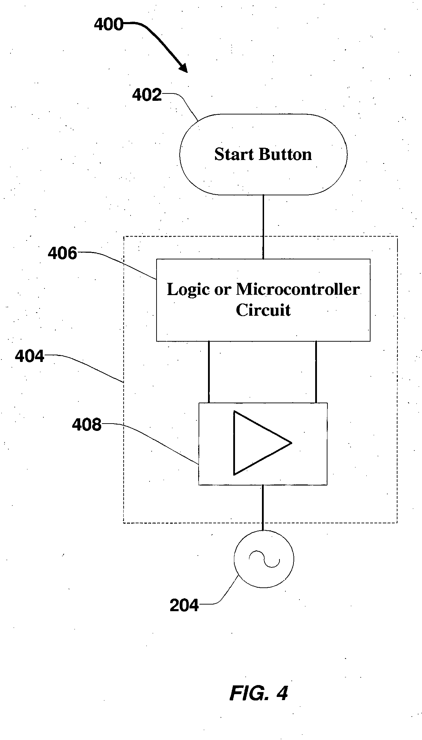

FIG. **4** illustrates a system **400** for varying the starting direction of the working implements **106** and **108** and thus the electric power tool **100** according to another embodiment of the present invention. The system **400** may be incorporated in the exemplary electric power tool **100.** The system **400** may include a button **402** for turning the cutting apparatus **100** on and off. The button **402** may be provided on the body of the electric power tool **100. As** shown, the system **400** may also consist of the motor **204.**

Further as shown in FIG. **4****,** the system **400** may further include a control unit **404** for controlling the starting direction of the electric power tool **100.** The control unit **404** is configured such that none of the starting directions is preferred over the other starting direction by a factor of more than 10. In another embodiment of the present invention, the factor may be less than 2. Further, in another embodiment of the present invention, the control unit **404** may maintain a uniform distribution of both starting directions over a multitude of starting cycles. In other words, the control unit ensures that, over a multitude of starting cycles, the ratio of the number of starts in one direction to the number of starts in the opposite direction should not exceed 10 and should preferably be less than 2 and most preferably be uniformly distributed. The control unit **404** may have dedicated electronic device for varying the starting direction of the electric power tool **100.**

As shown in FIG. **4****,** the control unit **404** may include a microcontroller **406.** The microcontroller **406** may be programmed to control the starting direction of the electric power tool **100.** The microcontroller **406** may be programmed to generate one or more parameters. In an embodiment of the present invention, the microcontroller **406** may have an inbuilt storing device for storing the generated parameters. The microcontroller **406** may be further programmed to use the parameters for deciding the starting direction of the electric power tool **100.** For example, the microcontroller **406** may generate an n bit binary number for deciding the starting direction. In an embodiment of the present invention, the microcontroller **406** may be programmed to generate a definite sequence of parameters. In another embodiment of the present invention, the microcontroller **406** may generate the parameters randomly. In various embodiments of the present invention, the microcontroller **406** may generate parameters such that none of the starting direction is preferred over the other starting direction by more than a factor of 10. In an embodiment of the present invention, the said factor may be less than 2. In other words, the microcontroller **406** may generate parameters such that, over a multitude of starting cycles, the ratio of the number of starts in one direction to the number of starts in the opposite direction should not exceed 10 and should preferably be less than 2 and most preferably be uniformly distributed.

In an embodiment of the present invention, the microcontroller **406** may be provided with an external storing device for storing the parameters generated. The external storing devices may include a Random Access Memory (RAM), Read Only Memory (ROM), Programmable Read Only Memory (PROM), Erasable Programmable Read Only Memory (EPROM) and the like.

In an embodiment of the present invention, a decision in respect to the starting direction of the electric power tool **100** is generated during a start-up of the motor **204.** When the motor **204** is energized, the microcontroller **406** may generate parameters for instantly deciding the starting direction of the electric power tool **100.** The microcontroller **406** may also employ other methods, without generating parameters for deciding the starting direction. In another embodiment of the present invention, the decision in respect to the starting direction may be generated with the stop of the motor **204,** where the stop of the motor **204** precedes a following start. For example, the microcontroller **406** may store values of parameters on a storing device while the motor **204** of the electric power tool **100** is running. The microcontroller **406** may control a regulator **408** based on the stored parameters for starting the electric power tool **100** in a specified direction.

The voltage regulator **408** is to regulate the voltage applied across the terminals of the motor **204.** The regulator **408** is capable of providing a voltage of more than one polarity. Further, based on the decision in respect to the starting direction, the microcontroller **406** may control the regulator **408** to generate a voltage of appropriate polarity across the terminals of the motor **204.** In an embodiment of the present invention, the regulator **408** may be a bridge rectifier. Other voltage converters known in the art such as, but not limited to, a full wave rectifier, a power converter and the like may also be used.

Other embodiments of the present invention may include a mechanical device for varying the starting direction of the working implements **106** and **108** and thus the electric power tool **100.** The mechanical device may have two stable equilibrium operating points. Each operating point may correspond to a unique starting direction of the working implements **106** and **108.** In an embodiment of the present invention, the mechanical device may be a gearing device. Gearing apparatus with capability of bidirectional torque transmission are known in the art. Various gearing apparatus depending on their present configuration may transmit torque in a given direction. The gearing apparatus may be brought to a configuration wherein the transmission of torque takes place in the opposite direction.

In the drawings and specification, there have been disclosed preferred embodiments and examples of the invention and, although specific terms are employed, they are used in a generic and descriptive sense only and not for the purpose of limitation, the scope of the invention being set forth in the following claims.

## Claims

1. An electric power tool (**100**) comprising:
at least one working implement (**106**, **108**), wherein the working implement (**106**, **108**) is adapted to perform an operational movement;
a motor (**204**) to drive the at least one working implement (**106, 108**), and
a control unit (**206**, **404**) adapted to control a start and stop of the motor (**204**),
wherein the control unit (**206**, **404**)
is configured to vary a starting direction of the operational movement of the at least one working implement (**106, 108**),
**characterized in that,**
the control unit (**206**, 4**0**4) is adapted to control the start of the motor (**204**) such that, over a multitude of starting cycles, the ratio of the number of starts in one direction to number of starts in the opposite direction does not exceed 10, and preferably is less than 2.

2. An electric power tool (**100**) according to claim 1, wherein the control unit (**206**, **404**) is configured such that over a multitude of starting cycles both of the two starting directions in respect to the operational movement is uniformly distributed.

3. An electric power tool (**100**) according to claim 1 or 2, wherein the operational movement is at least one of rotary, oscillating, eccentric rotary movement.

4. An electric power tool (**100**) according to claim 1 or 2, wherein the control unit (**206**, **404**) uses at least one of electric, electronic or mechanical device to vary the starting direction of the electric power tool (**100**).

5. An electric power tool (**100**) according to claim 4, wherein the electronic device or the electric device comprises a storing device, wherein the storing device is adapted to store one or more parameters to define the starting direction of the electric power tool (**100**).

6. An electric power tool (**100**) according to claim 5, wherein the storing device is at least one of a memory or flip-flop.

7. An electric power tool (**100**) according to claim 6, wherein the electronic device or the electric device comprises a circuit for generating one or more parameters.

8. An electric power tool (**100**) according to claim 5 to 7, wherein the one or more parameters are randomly generated.

9. An electric power tool (**100**) according to claim 1 to 4, wherein a decision in respect to the starting direction is generated during a start-up of the motor (**204**).

10. An electric power tool (**100**) according to claim 1 to 4, wherein a decision in respect to the starting direction is generated with the stop of the motor (**204**), and wherein the stop of the motor (**204**) precedes the start.

11. An electric power tool (**100**) according to claim 1 to 4, wherein the control unit (**206**, **404**) is adapted to use a double pole double throw switch for varying the starting direction of the electric power tool (**100**).

12. An electric power tool (**100**) according to claim 1 to 4, wherein the control unit (**206**, **404**) is adapted to use a two coil relay (**210**) for varying the starting direction of the electric power tool (**100**).

13. An electric power tool (**100**) according to claim 4, wherein the mechanical device comprises a mechanical memory or flag and wherein the mechanical device may place at least parts of its structure in at least two different stable conditions.

14. An electric power tool (**100**) according to claim 4 or 13, wherein the mechanical device is a gearing device and wherein the gearing device changes its directional transmission behaviour in each starting attempt.

15. An electric power tool (**100**) according to any of the preceding claims wherein the electric power tool (**100**) comprises at least one of hedge trimmer, grass shear, shrub shear, grinder, sander, shredder, line trimmer.

## Patentansprüche

1. Elektrowerkzeug (100), umfassend:
zumindest ein Arbeitsgerät (106, 108), wobei das Arbeitsgerät (106, 108) zum Ausführen einer Betriebsbewegung geeignet ist;
einen Motor (204) zum Antreiben des zumindest einen Arbeitsgeräts (106, 108) und
eine Steuereinheit (206, 404), die zum Steuern eines Starts und Stopps des Motors (204) geeignet ist, wobei die Steuereinheit (206, 404)
zum Variieren einer Startrichtung der Betriebsbewegung des zumindest einen Arbeitsgeräts (106, 108) konfiguriert ist,
**dadurch gekennzeichnet, dass**
die Steuereinheit (206, 404) zum derartigen Steuern des Starts des Motors (204) geeignet ist, dass über eine Vielzahl von Startzyklen hinweg das Verhältnis der Anzahl von Starts in einer Richtung zur Anzahl von Starts in der Gegenrichtung 10 nicht überschreitet und vorzugsweise unter 2 liegt.

2. Elektrowerkzeug (100) nach Anspruch 1, wobei die Steuereinheit (206, 404) derart konfiguriert ist, dass über eine Vielzahl von Startzyklen hinweg beide der zwei Startrichtungen bezüglich der Betriebsbewegung einheitlich verteilt sind.

3. Elektrowerkzeug (100) nach einem der Ansprüche 1 oder 2, wobei die Betriebsbewegung zumindest eine einer Dreh-, Schwing-, exzentrischen Drehbewegung ist.

4. Elektrowerkzeug (100) nach einem der Ansprüche 1 oder 2, wobei die Steuereinheit (206, 404) zumindest eines von einem elektrischen, elektronischen oder mechanischen Gerät zum Variieren der Startrichtung des Elektrowerkzeugs (100) benutzt.

5. Elektrowerkzeug (100) nach Anspruch 4, wobei das elektronische Gerät oder das elektrische Gerät ein Speichergerät umfasst, wobei das Speichergerät zum Speichern von einem oder mehr Parametern zum Definieren der Startrichtung des Elektrowerkzeugs (100) geeignet ist.

6. Elektrowerkzeug (100) nach Anspruch 5, wobei das Speichergerät zumindest eines von einem Speicher oder Flip-Flop ist.

7. Elektrowerkzeug (100) nach Anspruch 6, wobei das elektronische Gerät oder das elektrische Gerät eine Schaltung zum Erstellen von einem oder mehr Parametern umfasst.

8. Elektrowerkzeug (100) nach einem der Ansprüche 5 bis 7, wobei der eine oder mehr Parameter zufällig erstellt werden.

9. Elektrowerkzeug (100) nach einem der Ansprüche 1 bis 4, wobei eine Entscheidung bezüglich der Startrichtung während eines Startens des Motors (204) getroffen wird.

10. Elektrowerkzeug (100) nach einem der Ansprüche 1 bis 4, wobei eine Entscheidung bezüglich der Startrichtung mit dem Stopp des Motors (204) getroffen wird, und wobei der Stopp des Motors (204) dem Start vorangeht.

11. Elektrowerkzeug (100) nach einem der Ansprüche 1 bis 4, wobei die Steuereinheit (206, 404) zum Verwenden eines zweipoligen Umschalters zum Variieren der Startrichtung des Elektrowerkzeugs (100) geeignet ist.

12. Elektrowerkzeug (100) nach einem der Ansprüche 1 bis 4, wobei die Steuereinheit (206, 404) zum Verwenden eines zweispuligen Relais (210) zum Variieren der Startrichtung des Elektrowerkzeugs (100) geeignet ist.

13. Elektrowerkzeug (100) nach Anspruch 4, wobei das mechanische Gerät einen mechanischen Speicher oder Flag umfasst, und wobei das mechanische Gerät zumindest Teile seiner Struktur in zumindest zwei stabilen Zuständen platzieren kann.

14. Elektrowerkzeug (100) nach einem der Ansprüche 4 oder 13, wobei das mechanische Gerät ein Getriebegerät ist, und wobei das Getriebegerät sein Richtungsübertragungsverhalten bei jedem Startversuch ändert.

15. Elektrowerkzeug (100) nach einem der Ansprüche vorhergehenden Ansprüche, wobei das Elektrowerkzeug (100) zumindest eines einer Heckenschere, Grasschere, Strauchschere, Schleifmaschine, Sandpapierschleifmaschine, Motorsense umfasst.

## Revendications

1. Outil électrique (100) comprenant :
au moins un instrument de travail (106, 108), où l'instrument de travail (106, 108) est adapté pour effectuer un mouvement de fonctionnement ;
un moteur (204) pour entraîner l'au moins un instrument de travail (106, 108), et
une unité de commande (206, 404) adaptée pour commander un démarrage et un arrêt du moteur (204), où l'unité de commande (206, 404) est configurée pour faire varier une direction de démarrage du mouvement de fonctionnement de l'au moins un instrument de travail (106 108),
**caractérisé en ce que**,
l'unité de commande (206, 404) est adaptée pour commander le démarrage du moteur (204) de sorte que, sur une multitude de cycles de démarrage, le rapport du nombre de démarrages dans une direction sur un nombre de démarrages dans la direction opposée ne dépasse pas 10, et soit de préférence inférieur à 2.

2. Outil électrique (100) selon la revendication 1, dans lequel l'unité de commande (206, 404) est configurée de sorte que sur une multitude de cycles de démarrage les deux directions de démarrage par rapport au mouvement de fonctionnement soient uniformément réparties.

3. Outil électrique (100) selon la revendication 1 ou 2, dans lequel le mouvement de fonctionnement est au moins l'un d'un mouvement rotatif, d'un mouvement oscillant, d'un mouvement rotatif excentrique.

4. Outil électrique (100) selon la revendication 1 ou 2, dans lequel l'unité de commande (206, 404) utilise au moins l'un d'un dispositif électrique, d'un dispositif électronique ou d'un dispositif mécanique pour faire varier la direction de démarrage de l'outil électrique (100).

5. Outil électrique (100) selon la revendication 4, dans lequel le dispositif électronique ou le dispositif électrique comprend un dispositif de stockage, où le dispositif de stockage est adapté pour stocker un ou plusieurs paramètre(s) afin de définir la direction de démarrage de l'outil électrique (100).

6. Outil électrique (100) selon la revendication 5, dans lequel le dispositif de stockage est au moins l'une d'une mémoire ou d'une bascule.

7. Outil électrique (100) selon la revendication 6, dans lequel le dispositif électronique ou le dispositif électrique comprend un circuit pour générer un ou plusieurs paramètre(s).

8. Outil électrique (100) selon les revendications 5 à 7, dans lequel le ou les plusieurs paramètre(s) est/sont généré(s) de manière aléatoire.

9. Outil électrique (100) selon les revendications 1 à 4, dans lequel une décision en ce qui concerne la direction de démarrage est générée pendant un démarrage du moteur (204).

10. Outil électrique (100) selon les revendications 1 à 4, dans lequel une décision en ce qui concerne la direction de démarrage est générée avec l'arrêt du moteur (204), et où l'arrêt du moteur (204) précède le démarrage.

11. Outil électrique (100) selon les revendications 1 à 4, dans lequel l'unité de commande (206, 404) est adaptée pour utiliser un commutateur bipolaire à deux directions pour faire varier la direction de démarrage de l'outil électrique (100).

12. Outil électrique (100) selon les revendications 1 à 4, dans lequel l'unité de commande (206, 404) est adaptée pour utiliser un relais à deux bobines (210) pour faire varier la direction de démarrage de l'outil électrique (100).

13. Outil électrique (100) selon la revendication 4, dans lequel le dispositif mécanique comprend un drapeau ou une mémoire mécanique et où le dispositif mécanique peut placer au moins des parties de sa structure dans au moins deux conditions stables différentes.

14. Outil électrique (100) selon la revendication 4 ou 13, dans lequel le dispositif mécanique est un dispositif d'engrenage et où le dispositif d'engrenage modifie son comportement de transmission directionnelle à chaque tentative de démarrage.

15. Outil électrique (100) selon l'une des revendications précédentes, dans lequel l'outil électrique (100) comprend au moins l'un(e) d'un taille-haie, d'une cisaille à gazon, d'une cisaille à arbuste, d'un broyeur, d'une ponceuse, d'un déchiqueteur, d'une tondeuse à fil.
